# EUROPÄISCHE PATENTANMELDUNG

(11) **EP 4 559 619 A1**
(43) Veröffentlichungstag der Anmeldung: **28.05.2025**
(21) Anmeldenummer: 24213976.4
(22) Anmeldetag: 19.11.2024
(51) Int. Cl.: B23Q 3/06, B23Q 3/10, B25B 1/10, B25B 1/24

(54) **SPANNSYSTEM SOWIE VERSTELLBACKEN-BAUGRUPPE UND FESTBACKEN-BAUGRUPPE**

(30) Priorität: 24.11.2023 DE 102023132773
(71) Anmelder: PIRAS Metalltechnik GmbH & Co. KG, 95163 Weissenstadt (DE)
(72) Erfinder: PIRAS, Guido, 95163 Weißenstadt (DE)
(74) Vertreter: Massinger, Marco

(57) **Zusammenfassung**

Die Erfindung betrifft ein Spannsystem für ein Werkstück mit einem Maschinentisch (3), und einer Spannvorrichtung, wobei die Spannvorrichtung mit dem Maschinentisch (3) verbunden ist, und wobei die Spannvorrichtung durch eine Festbacken-Baugruppe (5) und durch eine von der Festbacken-Baugruppe (5) separate, Verstellbacken-Baugruppe (7) gebildet ist.

## Beschreibung

Die Erfindung betrifft ein Spannsystem nach dem Anspruch 1 sowie gemäß dem Anspruch 14 eine Verstellbacken-Baugruppe und gemäß dem Anspruch 15 eine Festbacken-Baugruppe.

Ein beispielhaftes Spannsystem zum Einspannen von Werkstücken weist einen Maschinentisch, einen mit dem Maschinentisch verbindbaren Grundkörper, eine Festbackeneinheit und eine Verstellbackeneinheit auf. Die Festbackeneinheit ist fest mit dem Grundkörper verbunden. Die Verstellbackeneinheit ist ebenfalls mit dem Grundkörper verbunden, jedoch derart, dass die Verstellbackeneinheit mittels einer Spindel des Spannsystems, in Bezug auf den Grundkörper, positionsverstellbar ist. Zwischen der Verstellbackeneinheit und der Festbackeinheit ist ein Werkstück einspannbar.

Bei diesem Spannsystem ist der maximal mögliche Spannbereich des Spannsystems durch die Länge des Grundkörpers begrenzt. Dies hat den Nachteil, dass zum Einspannen unterschiedlich großer Werkstücke entweder mehrere, verschieden groß dimensionierte Spannsysteme vorgehalten werden müssen, oder dass für ein Werkstück mit geringer Größe ein im Vergleich zur Größe des Werkstückes zu groß dimensioniertes Spannsystem verwendet werden muss.

Die Aufgabe der Erfindung besteht somit darin, ein Spannsystem bereitzustellen, dass flexibel an Werkstücke unterschiedlicher Geometrie und unterschiedlicher Größe anpassbar ist.

Diese Aufgabe wird gelöst mit den Merkmalen der unabhängigen Ansprüche. Vorteilhafte Ausgestaltungen sind Gegenstand der darauf rückbezogenen Unteransprüche.

Erfindungsgemäß vorgeschlagen ist ein Spannsystem für ein Werkstück, mit einem Maschinentisch und einer Spannvorrichtung, wobei die Spannvorrichtung mit dem Maschinentisch verbunden ist, und wobei die Spannvorrichtung durch eine Festbacken-Baugruppe und durch eine von der Festbacken-Baugruppe separate, Verstellbacken-Baugruppe gebildet ist. Somit kann ein, in Abhängigkeit der Dimension des Maschinentisches, endlos großer Spannbereich zum Einspannen verschieden großer Werkstückes bereitgestellt werden, und zwar mit nur einer Spannvorrichtung. Außerdem ist die Spannvorrichtung aufgrund der Unterteilung in die zwei Baugruppe einfacher und ergonomischer handhabbar.

Bei einer beispielhaften Ausführungsform kann vorgesehen sein, dass die Festbacken-Baugruppe und die Verstellbacken-Baugruppe separat voneinander mit dem Maschinentisch verbunden sind, und/oder dass die Festbacken-Baugruppe und die Verstellbacken-Baugruppe, bevorzugt ausschließlich, mittelbar über zumindest den Maschinentisch miteinander verbunden sind. Jede der Baugruppe kann somit für sich genommen frei am Maschinentisch angeordnet werden. Die vergrößert den Einsatzbereich im Vergleich zu bekannten Spannsystemen erheblich. Insbesondere ist es aufgrund der freien Positionier- und Orientierbarkeit der Baugruppe möglich, stets eine gute Zugänglichkeit am Werkstück für beispielsweise Messaufgaben oder Bearbeitungsaufgaben zu gewährleisten.

Bei einer exemplarischen Ausführungsform kann vorgesehen sein, dass die Festbacken-Baugruppe und/oder die Verstellbacken-Baugruppe, bevorzugt unmittelbar, auf einer Tischoberfläche des Maschinentisches aufliegen und gegen diese verspannt sind. Es kann daher auf den Einsatz von Adapter- oder Nullpunktspannplatten verzichtet werden.

Bevorzugt kann vorgesehen sein, dass die Verstellbacken-Baugruppe einen, im Wesentlichen L-förmigen Verstellbacken-Grundkörper, und/oder eine Verstellbackeneinheit und/oder ein Schienensystem mit einer Linearführungsschiene und einem Schlitten aufweist.

Bei einer vorzugsweisen Ausführungsform kann vorgesehen sein, dass die Verstellbacken-Baugruppe einen, bevorzugt im Wesentlichen L-förmigen, Verstellbacken-Grundkörper und/oder eine Verstellbackeneinheit und/oder ein Schienensystem aufweist. Die Verstellbacken-Baugruppe ist somit mehrteilig aufgebaut. Es ist daher möglich die Verstellbacken-Baugruppe durch Austausch von Einzelteilen an die jeweilige Einsatzbedingung anzupassen, ohne dass an der grundlegenden Konstruktion der Verstellbacken-Baugruppe etwas geändert werden müsste.

Bei einer exemplarischen Ausführungsform kann vorgesehen sein, dass die Verstellbackeneinheit über das Schienensystem mit dem Verstellbacken-Grundkörper verbunden ist, und/oder dass die Verstellbackeneinheit über das Schienensystem, entlang einer Längsachse einer Linearführungsschiene des Schienensystems, verstellbar an dem Verstellbacken-Grundkörper gelagert ist. Durch das Schienensystem ist eine bewegliche und verschleißarme Anbindung der Verstellbackeneinheit am Verstellbacken-Grundkörper bereitgestellt.

Bei einer beispielhaften Ausführungsform kann vorgesehen sein, dass das Schienensystem eine Linearführungsschiene, Wälzkörper und einen Schlitten aufweist, wobei bevorzugt vorgesehen sein kann, dass die Linearführungsschiene, die Wälzkörper und der Schlitten eine Laufrollenführung und/oder eine Profilschienenwälzführung für die Verstellbackeneinheit, bevorzugt am Verstellbacken-Grundkörper, bilden. Mittels der Linearführungsschiene ist eine leichtgängige Beweglichkeit der Verstellbackeneinheit am Verstellbacken-Grundkörper realisiert. Die Laufrollenführung stellt beispielsweise im Vergleich zu einer Gleitführung eine besonders leichtgängige, spielfreie, präzise und wesentlich verschleißärmere Möglichkeit dar, um die Verstellbackeneinheit beweglich am Verstellbacken-Grundkörper anzubinden.

Der Schlitten und die Verstellbackeneinheit können voneinander separate Bauteile sein. Der Schlitten kann kraftschlüssig mit der Verstellbackeneinheit verbunden, bevorzugt verschraubt oder vernietet, sein.

Beispielhaft ist vorgesehen, dass bei dem Schienensystem die Laufrollenführung durch eine Profilschienenwälzführung gebildet ist, und/oder dass das Schienensystem durch eine Profilschienenwälzführung gebildet ist, wobei vorgesehen ist, dass die Linearführungsschiene, die Wälzkörper und der Schlitten die Profilschienenwälzführung für die Verstellbackeneinheit, bevorzugt am Verstellbacken-Grundkörper, bilden.

Bevorzugt ist vorgesehen, dass bei dem Schienensystem, bevorzugt der Profilschienenwälzführung, eine erste Gruppe der Wälzkörper auf einer ersten Seite der Linearführungsschiene angeordnet ist, und/oder dass bei dem Schienensystem, bevorzugt der Profilschienenwälzführung, eine zweite Gruppe der Wälzkörper auf einer zweiten, der ersten Seite der Linearführungsschiene gegenüberliegenden, Seite der Linearführungsschiene angeordnet ist.

Das Schienensystem, bevorzugt die Profilschienenwälzführung, kann dazu ausgebildet sein und/oder dazu geeignet sein, dass sich, bei einer Verstellung der Verstellbackeneinheit relativ zu dem Verstellbacken-Grundkörper und/oder relativ zu der Linearführungsschiene, ein Teil der Wälzkörper auf der Linearführungsschiene und auf einer, durch den Schlitten gebildeten, Wälzkörperbahn abwälzt, wobei bevorzugt vorgesehen ist, dass, bei einer Verstellung der Verstellbackeneinheit relativ zu dem Verstellbacken-Grundkörper und/oder der Linearführungsschiene, die Wälzkörper, bevorzugt ringförmig, umlaufen, und zwar bevorzugt teilweise innerhalb des Schlittens und/oder teilweise zwischen der Linearführungsschiene und dem Schlitten.

Für ein besonders stabiles Schienensystem, bevorzugt eine besonders stabile Profilschienenwälzführung, kann vorgesehen sein, dass ein Teil der Wälzkörper der ersten Gruppe der Wälzkörper in einer ersten Umlaufebene, angeordnet ist, wobei bevorzugt vorgesehen ist, dass die Wälzkörper der ersten Gruppe der Wälzkörper, die in der ersten Umlaufebene angeordnet sind, bevorzugt, bei einer Verstellung der Verstellbackeneinheit relativ zu dem Verstellbacken-Grundkörper und/oder der Linearfürhungsschiene, bevorzugt ringförmig, entlang einer ringförmigen Umlaufbahn in der ersten Umlaufebene umlaufen. Alternativ oder zusätzlich ist vorgesehen, dass ein Teil der Wälzkörper der ersten Gruppe der Wälzkörper in einer zweiten Umlaufebene, angeordnet ist, wobei bevorzugt vorgesehen ist, dass die Wälzkörper der ersten Gruppe der Wälzkörper, die in der zweiten Umlaufebene angeordnet sind, bevorzugt, bei einer Verstellung der Verstellbackeneinheit relativ zu dem Verstellbacken-Grundkörper und/oder der Linearführungsschiene, bevorzugt ringförmig, entlang einer ringförmigen Umlaufbahn in der zweiten Umlaufebene umlaufen.

Beispielhaft ist vorgesehen, dass sich die erste Umlaufebene parallel und/oder beabstandet von der zweiten Umlaufebene erstreckt, und/oder dass sich die erste Umlaufebene und/oder die zweite Umlaufebene parallel und/oder beabstandet zu der Tischoberfläche des Maschinentisches, auf der die Verstellbacken-Baugruppe montiert ist, erstreckt.

Exemplarisch ist vorgesehen, dass ein Teil der Wälzkörper der zweiten Gruppe der Wälzkörper in der ersten Umlaufebene, angeordnet ist, wobei bevorzugt vorgesehen ist, dass die Wälzkörper der zweiten Gruppe der Wälzkörper, die in der ersten Umlaufebene angeordnet sind, bevorzugt, bei einer Verstellung der Verstellbackeneinheit relativ zu dem Verstellbacken-Grundkörper und/oder der Linearführungsschiene, bevorzugt ringförmig, entlang einer ringförmigen Umlaufbahn in der ersten Umlaufebene umlaufen. Alternativ oder zusätzlich ist vorgesehen, dass ein Teil der Wälzkörper der zweiten Gruppe der Wälzkörper in der zweiten Umlaufebene, angeordnet ist, wobei bevorzugt vorgesehen ist, dass die Wälzkörper der zweiten Gruppe der Wälzkörper, die in der zweiten Umlaufebene angeordnet sind, bevorzugt, bei einer Verstellung der Verstellbackeneinheit relativ zu dem Verstellbacken-Grundkörper und/oder der Linearführungsschiene, bevorzugt ringförmig, entlang einer ringförmigen Umlaufbahn in der zweiten Umlaufebene umlaufen.

Mindestens einer der Wälzkörper oder mehrere der Wälzkörper oder alle der Wälzkörper können jeweils, bevorzugt im Wesentlichen, die Form eines Zylinders oder jeweils, bevorzugt im Wesentlichen, die Form einer Kugel aufweisen.

Die Linearführungsschiene kann ein, von dem Verstellbacken-Grundkörper separates, Bauteil sein. Die Linearführungsschiene kann kraftschlüssig mit dem Verstellbacken-Grundkörper verbunden, bevorzugt verschraubt oder vernietet, sein.

Selbstverständlich ist es auch möglich, dass die Verstellbackeneinheit auch über mehr als ein Schienensystem verstellbar an dem Verstellbacken-Grundkörper gelagert ist. Hierzu kann zusätzlich zu dem Schienensystem ein Zusatz-Schienensystem eingesetzt werden, das bau- und funktionsgleich zu dem Schienensystem ist. Das Zusatz-Schienensystem kann parallel beabstandet zu dem Schienensystem angeordnet sein. Das Schienensystem und das Zusatz-Schienensystem können in einer Ebene, bevorzugt parallel zueinander beabstandet, angeordnet sein, welche Ebene sich parallel zu der Tischoberfläche des Maschinentisches erstreckt, auf der die Verstellbacken-Baugruppe montiert ist. Das Schienensystem und/oder die Linearschiene des Schienensystems und das Zusatz-Schienensystem und/oder die Linearschiene des Zusatz-Schienensystems können, in Bezug auf eine oder die Verstellbacken-Längsmittelebene des Verstellbacken-Grundkörpers, ebenensymmetrisch zueinander angeordnet sein.

Bei einer exemplarischen Ausführungsform kann vorgesehen sein, dass die Verstellbacken-Baugruppe einen Lagerbock und eine Spindel aufweist, wobei vorgesehen ist, dass die Spindel in dem Lagerbock, um eine der Spindel zugeordnete Spindel-Drehachse, drehbar gelagert ist. Der Lagerbock stützt die Spindel mechanisch ab und nimmt mittels der Spindel aufgebrachte Spannkräfte auf und leitet diese in den Verstellbacken-Grundkörper weiter.

Bei einer bevorzugten Ausführungsform kann vorgesehen sein, dass die Spindel ein verstellbackenseitiges Ende aufweist, das mit der Verstellbackeneinheit verbunden ist, wobei die Verstellbacken-Baugruppe dazu ausgebildet ist und/oder dazu geeignet ist, dass sich durch Drehen der Spindel um die Spindel-Drehachse die Position der Verstellbackeneinheit relativ zum Verstellbacken-Grundkörper ändert. Mittels der Spindel sind somit hohe Spannkräfte auf ein Werkstück aufbringbar und die Verstellbackeneinheit ist relativ zum Verstellbacken-Grundkörper stufenlos verstellbar.

Bei einer exemplarischen Ausführungsform kann vorgesehen sein, dass die Verstellbacken-Baugruppe dazu ausgebildet ist und/oder dazu geeignet ist, dass die Position der Verstellbackeneinheit relativ zum Verstellbacken-Grundkörper, bevorzugt ausschließlich, entlang der Spindel-Drehachse änderbar ist. Das Schienensystem stellt für die Verstellbackeneinheit somit in Bezug auf den Verstellbacken-Grundkörper nur einen einzigen Bewegungsfreiheitsgrad bereit. Die Verstellbackeneinheit weicht daher auch bei außermittig aufgebrachten Einspannkräften nicht zur Seite und auch nicht zur Seite aus. Dies ermöglicht unter anderem eine wiederholgenaue Einspannung.

Bei einer beispielhaften Ausführungsform kann vorgesehen sein, dass die Verstellbackeneinheit eine Verstellbacke und eine Verstellbacken-Spannplatte aufweist, die mit der Verstellbacke verbunden ist, wobei bevorzugt vorgesehen sein kann, dass die Verstellbackeneinheit eine Verstellbacken-Prägespannleiste aufweist. Mittels der Verstellbacken-Prägespannleiste können auf geeignete Weise vorgeprägte Werkstücke bei geringen Einspannkräfte zuverlässig eingespannt werden. Denn über die Prägespannleiste wird zwischen der Verstellbackeneinheit und dem Werkstück nicht nur ein Kraft-, sondern zusätzlich auch ein Formschluss erreicht.

Beispielhaft kann vorgesehen sein, dass der Verstellbacken-Grundkörper über zwei oder mehr, bevorzugt vier, Verstellbacken-Lagerstellen lagefest an dem Maschinentisch, vorzugsweise über Maschinentisch-Nuten des Maschinentischs, befestigt ist. Zwei Verstellbacken-Lagerstellen wären prinzipiell schon ausreichend, um den Verstellbacken-Grundkörper lagedefiniert auf dem Maschinentisch anzuordnen.

Bei einer bevorzugten Ausführungsform kann vorgesehen sein, dass der Verstellbacken-Grundkörper über vier Verstellbacken-Lagerstellen lagefest an dem Maschinentisch, bevorzugt in Maschinentisch-Nuten des Maschinentisches, besonders bevorzugt in einer ersten Maschinentisch-Nut und/oder einer zweiten Maschinentisch-Nut, gelagert ist. Vier Verstellbacken-Lagerstellen ermöglichen es, den Verstellbacken-Grundkörper besonders exakt und lagedefiniert auf dem Maschinentisch anzuordnen.

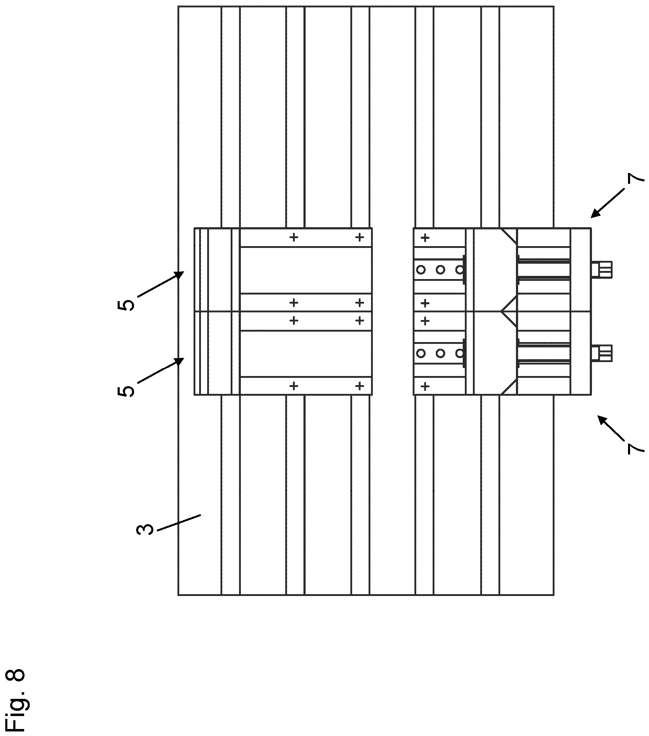

Bei einer exemplarischen Ausführungsform kann vorgesehen sein, dass jede der Verstellbacken-Lagerstellen durch eine Verstellbacken-Zentrierhülse gebildet ist, die in einen von dem Verstellbacken-Grundkörper nach außen begrenzten Verstellbacken-Durchbruch eingesetzt ist, und dass jede der Verstellbacken-Zentrierhülsen mit einem Hülsenüberstand in eine der Maschinentisch-Nuten, bevorzugt in die erste Maschinentisch-Nut oder in die zweite Maschinentisch-Nut, einragt. Die Verstellbacken-Zentrierhülse sind also innerhalb einer Außenkontur des Verstellbacken-Grundkörpers angeordnet. Dies begünstigt ein lückenloses oder bis auf wenige Zehntelmillimeter lückenloses Aneinanderreihen mehrerer Spannvorrichtungen nebeneinander, wie dies beispielhaft in der Figur 8 dargestellt ist.

Bevorzugt kann vorgesehen sein, dass die Verstellbacken-Zentrierhülsen mit dem Verstellbacken-Grundkörper, bevorzugt mit Seitenflächen des Verstellbacken-Grundkörper, flächenbündig abschließen. Das heißt, dass eine Breite des Verstellbacken-Grundkörpers durch den Verstellbacken-Grundkörper selbst definiert ist. Dies ermöglicht ein nahezu lückenloses Nebeneinanderreihen mehrerer Spannvorrichtungen, wie dies beispielhaft in Figur 8 dargestellt ist.

Bei einer bevorzugten Ausführungsform kann vorgesehen sein, dass jede der Verstellbacken-Zentrierhülsen im Bereich ihres Hülsenüberstandes einen Außendurchmesser aufweist, der betragsgleich mit einer Öffnungsbreite der Nutöffnung einer der Verstellbacken-Zentrierhülse jeweils zugeordneten Maschinentisch-Nut ist, wobei bevorzugt vorgesehen ist, dass die Verstellbacken-Zentrierhülsen, bevorzugt aufgrund des Außendurchmessers, der betragsgleich mit der Öffnungsbreite ist, in der jeweils zugeordneten Maschinentisch-Nut entlang der Öffnungsbreite fixiert sind. Die Betragsgleichheit der Abmessungen führt dazu, dass sich jede Verstellbacken-Zentrierhülse an beiden Nutseitenwänden einer Maschinentisch-Nut abstützt, in die Verstellbacken-zentrierhülse einragt. Der Verstellbacken-Grundkörper ist somit schon allein durch das Einragen der Verstellbacken-Zentrierhülse mittels des Hülsenüberstandes in die Maschinentisch-Nut in der Maschinentisch-Nut geführt.

Bei einer besonders bevorzugten Ausführungsform kann vorgesehen sein, dass jeder Verstellbacken-Zentrierhülse eine Verstellbacken-Schraube zugeordnet ist, die durch einen, bevorzugt von der jeweils zugeordneten Verstellbacken-Zentrierhülse nach außen begrenzten, Zentrierhülsendurchlass geführt ist. Mittels der Verstellbacken-Schraube ist der Verstellbacken-Grundkörper gegen den Maschinentisch verspannbar.

Bei einer beispielhaften Ausführungsform kann vorgesehen sein, dass die Verstellbacken-Schraube über eine Innengewindebohrung eines, bevorzugt einer Maschinentisch-Nut angeordneten und/oder fixierten, besonders bevorzugt in der ersten Maschinentisch-Nut oder in der zweiten Maschinentisch-Nut angeordneten und/oder fixierten, Nutelementes mit dem Nutelement verschraubt ist. Die Innengewindebohrungen wird somit von zum Maschinentisch separaten Nutelementen bereitgestellt. Es kann daher auf Innengewindebohrungen im Maschinentisch verzichtet werden, die ansonsten die mögliche, wirksame Auflagefläche des Verstellbacken-Grundkörpers auf dem Maschinentisch verringern würden.

Bei einer exemplarischen Ausführungsform kann vorgesehen sein, dass die Verstellbacken-Schraube derart mit dem Nutelement verschraubt ist, dass zwischen einem Schraubenkopf der Verstellbacken-Schraube eine der Verstellbacken-Zentrierhülsen, der Verstellbacken-Grundkörper und der Maschinentisch verspannt ist. Auf diese Weise ist der Verstellbacken-Grundkörper zuverlässig positions- und lagefest mit dem Maschinentisch verbunden, und zwar teilweise formschlüssig über die Hülsenüberstände und teilweise kraftschlüssig durch das verspannen mittels der Verstellbacken-Schraube.

Bei einer bevorzugten Ausführungsform kann vorgesehen sein, dass die Festbacken-Baugruppe einen Festbacken-Grundkörper aufweist, wobei bevorzugt vorgesehen ist, dass der Festbacken-Grundkörper über vier Festbacken-Lagerstellen lagefest an dem Maschinentisch, bevorzugt in Maschinentisch-Nuten des Maschinentisches, besonders bevorzugt in einer dritten Maschinentisch-Nut und/oder einer vierten Maschinentisch-Nut, gelagert ist. Vier Festbacken-Lagerstellen ermöglichen es, den Festbacken-Grundkörper besonders exakt und lagedefiniert auf dem Maschinentisch anzuordnen.

Bei einer besonders bevorzugten Ausführungsform kann vorgesehen sein, dass jede der Festbacken-Lagerstellen durch eine Festbacken-Zentrierhülse gebildet ist, die in einen von dem Festbacken-Grundkörper nach außen begrenzten Festbacken-Durchbruch eingesetzt ist, und dass jede der Festbacken-Zentrierhülsen mit einem Hülsenüberstand in eine der Maschinentisch-Nuten, bevorzugt in die dritte Maschinentisch-Nut oder in die vierte Maschinentisch-Nut, einragt. Die Festbacken-Zentrierhülse sind also innerhalb einer Außenkontur des Festbacken-Grundkörpers angeordnet. Dies begünstigt ein nahezu lückenloses Aneinanderreihen mehrerer Spannvorrichtungen nebeneinander, wie dies beispielhaft in der Figur 8 dargestellt ist.

Bei einer beispielhaften Ausführungsform kann vorgesehen sein, dass jede der Festbacken-Zentrierhülsen im Bereich ihres Hülsenüberstandes einen Außendurchmesser aufweist, der betragsgleich mit einer Öffnungsbreite der Nutöffnung einer der Festbacken-Zentrierhülse jeweils zugeordneten Maschinentisch-Nut ist. Die Betragsgleichheit der Abmessungen führt dazu, dass sich jede Festbacken-Zentrierhülse an beiden Nutseitenwänden einer Maschinentisch-Nut abstützt, in die Festbacken-Zentrierhülse einragt. Der Festbacken-Grundkörper ist somit schon allein durch das Einragen der Festbacken-Zentrierhülse mittels des Hülsenüberstandes in die Maschinentisch-Nut in der Maschinentisch-Nut geführt.

Bei einer bevorzugten Ausführungsform kann vorgesehen sein, dass jeder Festbacken-Zentrierhülse eine Festbacken-Schraube zugeordnet ist, die durch einen, bevorzugt von der jeweils zugeordneten Festbacken-Zentrierhülse nach außen begrenzten, Zentrierhülsendurchlass geführt ist. Mittels der Festbacken-Schraube ist der Festbacken-Grundkörper gegen den Maschinentisch verspannbar.

Bei einer exemplarischen Ausführungsform kann vorgesehen sein, dass jede Festbacken-Schraube über eine Innengewindebohrung eines, bevorzugt in der Maschinentisch-Nut angeordneten und/oder fixierten, besonders bevorzugt in der dritten Maschinentisch-Nut oder in der vierten Maschinentisch-Nut angeordneten und/oder fixierten, Nutelementes mit dem Nutelement verschraubt ist. Die Innengewindebohrungen wird somit von zum Maschinentisch separaten Nutelementen bereitgestellt. Es kann daher auf Innengewindebohrungen im Maschinentisch verzichtet werden, die ansonsten die mögliche, wirksame Auflagefläche des Festbacken-Grundkörpers auf dem Maschinentisch verringern würden.

Bei einer bevorzugten Ausführungsform kann vorgesehen sein, dass die Festbacken-Schraube derart mit dem Nutelement verschraubt ist, dass zwischen einem Schraubenkopf der Festbacken-Schraube eine der Festbacken-Zentrierhülsen, der Festbacken-Grundkörper und der Maschinentisch verspannt ist. Auf diese Weise ist der Festbacken-Grundkörper zuverlässig positions- und lagefest mit dem Maschinentisch verbunden, und zwar teilweise formschlüssig über die Hülsenüberstände und teilweise kraftschlüssig durch das Verspannen mittels der Festbacken-Schraube.

Bei einer exemplarischen Ausführungsform kann vorgesehen sein, dass die Verstellbacken-Durchbrüche und/oder die Festbacken-Durchbrüche in einem quadratischen Lochbild angeordnet sind, wobei bevorzugt vorgesehen sein kann, dass das quadratische Lochbild eine Kantenlänge aufweist, die betragsgleich mit einem Nutabstand zueinander benachbarter Maschinentisch-Nuten ist. Durch das quadratische Lochbild ist es möglich, den Verstellbacken-Grundkörper und/oder den Festbacken-Grundkörper über die vier Lagerstellen auch um 90°, 180° oder 270° gedreht am Maschinentisch zu befestigen. Somit lassen sich mit beispelsweise zwei Spannvorrichtungen besonders einfach auch runde Werkstücke einspannen.

Bei einer vorzugsweisen Ausführungsform kann vorgesehen sein, dass die in einer Maschinentisch-Nut angeordneten und/oder fixierten Nutelemente, vorzugsweise jeweils, zu einer Rasterzentriernutleiste zusammengefasst sind, und dass jede Rasterzentriernutleiste die Innengewindebohrungen aufweist, wobei bevorzugt vorgesehen sein kann, dass die Innengewindebohrungen, bevorzugt entlang einer Längserstreckungsrichtung der Rasterzentriernutleiste, äquidistant voneinander beabstandet sind, und zwar um einen vordefinierten Innengewindebohrungs-Abstand. Die Rasterzentriernutenleisten haben insbesondere den Vorteil, dass sie nach einmaliger Positionierung in der ihnen jeweils zugeordneten Maschinentisch-Nut eine Anschraubbasis für die Verstellbacken-Schrauben oder für die Festbacken-Schrauben bilden, an der der Verstellbacken-Grundkörper oder der Festbacken-Grundkörper wiederholgenau befestigbar ist.

Bevorzugt kann vorgesehen sein, dass jede der Rasterzentriernutleisten in genau eine der Maschinentisch-Nuten eingesetzt ist, vorzugsweise in dieser positions- und lagefest fixiert ist.

Alternativ kann vorgesehen sein, dass jedes Nutelement jeweils durch einen Nutenstein gebildet ist. Die Nutensteine haben den Vorteil, dass sie besonders gut und kostengünstig verfügbar sind.

Bei einer beispielhaften Ausführungsform kann vorgesehen sein, dass die Verstellbacken-Baugruppe ein Spindel-Schnellverstellsystem für die Spindel aufweist, wobei bevorzugt vorgesehen sein kann, dass das Spindel-Schnellverstellsystem durch den Lagerbock oder die Ausgestaltung des Lagerbockes bereitgestellt oder gebildet ist. Durch das Spindel-Schnellverstellsystem ist die Verstellbackeneinheit relativ zum Verstellbacken-Grundkörper besonders schnell verstellbar. Dies führt zu einer erheblichen Zeitersparnis beim Einspannen eines Werkstückes.

Bei einer exemplarischen Ausführungsform kann vorgesehen sein, dass das Spindel-Schnellverstellsystem dazu ausgebildet ist und/oder dazu geeignet ist, dass das Außengewinde der Spindel, bevorzugt kurzzeitig, außer Gewindeeingriff mit einem Lagerbock-Inngewinde des Lagerbockes bringbar ist und die Spindel entlang einer Spindel-Drehachse der Spindel relativ zum Lagerbock-Innengewinde des Lagerbockes verschiebbar ist, wobei bevorzugt vorgesehen sein kann, dass das Außengewinde der Spindel, bevorzugt anschließend, erneut in Gewindeeingriff mit dem Lagerbock-Inngewinde des Lagerbockes bringbar ist. Dadurch, dass das Außengewinde der Spindel außer Gewindeeingriff mit dem Innengewinde des Lagerbockes bringbar ist, lässt sich die Verstellbackeneinheit, relativ zum Verstellbacken-Grundkörper, besonders zügig verstellen, und zwar ohne das zeitintensive Drehbewegungen der Spindel nötig wären.

Bei einer bevorzugten Ausführungsform kann vorgesehen sein, dass der Lagerbock zweiteilig ausgeführt ist und/oder durch ein Lagerbock-Unterteil und einen Lagerbock-Schwenkbügel gebildet ist, wobei bevorzugt vorgesehen sein kann, dass der Lagerbock-Schwenkbügel das Lagerbock-Innengewinde bereitstellt, mit welchem das Außengewinde der Spindel bei geschlossenem Lagerbock-Schwenkbügel in Gewindeeingriff steht. Dadurch, dass das Lagerbock-Innengewinde nur durch den Lagerbock-Schwenkbügel gebildet ist, kann das Außengewinde der Spindel auf einfache Weise außer Gewindeeingriff mit dem Lagerbock-Innengewinde gebracht werden.

Bei einer besonders bevorzugten Ausführungsform kann vorgesehen sein, dass der Lagerbock-Schwenkbügel von einer Schließposition des Lagerbock-Schwenkbügels in eine Offenposition des Lagerbock-Schwenkbügels relativ zum Lagerbock-Unterteil verschwenkbar ist, wobei bevorzugt vorgesehen sein kann, dass das Außengewinde der Spindel außer Gewindeeingriff mit dem Lagerbock-Inngewinde bringbar ist, sofern sich der Lagerbock-Schwenkbügel in der Offenposition befindet. Dadurch, dass der Lagerbock-Schwenkbügel zum Öffnen des Innengewindes lediglich verschwenkt werden muss, ist das Spindel-Schnellverstellsystem in kürzester Zeit einsetzbar. Außerdem ist somit sichergestellt, dass Bauteile, wie beispielsweise der Lagerbock-Schwenkbügel, stets mit dem Lagerbock-Unterteil verbunden bleiben. Ein Verlieren der Bauteile kann dadurch verhindert werden.

Bei einer beispielhaften Ausführungsform kann vorgesehen sein, dass die Verstellbacke und/oder der Festbacken-Grundkörper und/oder der Verstellbacken-Grundkörper aus einer Aluminiumlegierung gefertigt ist und vorzugsweise eloxiert ist. Die Verstellbacke, der Festbacken-Grundkörper und der Verstellbacken-Grundkörper sind somit gewichtsoptimiert ausgeführt.

Bevorzugt kann vorgesehen sein, dass die Spindel, der Lagerbock, die Linearführungsschiene und/oder der Schlitten aus Stahl gefertigt ist.

Bei einer besonders bevorzugten Ausführungsform kann vorgesehen sein, dass die Verstellbackeneinheit, bevorzugt ausschließlich, mittelbar mit dem Verstellbacken-Grundkörper verbunden ist und/oder außer Kontakt mit dem Verstellbacken-Grundkörper steht, und/oder dass die Verstellbackeneinheit, bevorzugt ausschließlich, über das Schienensystem und/oder über eine Spindel der Verstellbacken-Baugruppe mittelbar mit dem Verstellbacken-Grundkörper verbunden ist. Die Verstellbackeneinheit ist somit, relativ zum Verstellbacken-Grundkörper, besonders reibungsarm verstellbar.

Erfindungsgemäß vorgeschlagen ist auch eine, bevorzugt wie vorbeschriebene, Verstellbacken-Baugruppe wobei vorgesehen ist, dass die Verstellbacken-Baugruppe einen Verstellbacken-Grundkörper und/oder eine Verstellbackeneinheit und/oder ein Schienensystem aufweist.

Erfindungsgemäß vorgeschlagen ist ferner eine, bevorzugt wie vorbeschriebene, Festbacken-Baugruppe, wobei vorgesehen ist, die Festbacken-Baugruppe einen Festbacken-Grundkörper aufweist, wobei bevorzugt vorgesehen ist, dass der Festbacken-Grundkörper über vier Festbacken-Lagerstellen lagefest an dem Maschinentisch, bevorzugt in Maschinentisch-Nuten des Maschinentisches, besonders bevorzugt in einer dritten Maschinentisch-Nut und/oder einer vierten Maschinentisch-Nut, gelagert ist.

Bei einem Betrag des vordefinierten Nutabstandes c von 100 mm kann bevorzugt eine Spannvorrichtung mit einer Breite, vorzugsweise einer Backenbreite, von 125 mm eingesetzt werden. Bei einem Betrag des vordefinierten Nutabstandes c von 125 mm kann bevorzugt eine Spannvorrichtung mit einer Breite, vorzugsweise einer Backenbreite, von 150 mm eingesetzt werden.

Bevorzugt kann vorgesehen sein, dass der Verstellbacken-Grundkörper zu einer Verstellbacken-Längsmittelebene des Verstellbacken-Grundkörpers, vollständig oder im Wesentlichen, ebenensymmetrisch ist, wobei beispielhaft vorgesehen sein kann, dass die Verstellbacken-Längsmittelebene von der Spindel-Drehachse und der zentralen Verstellbacken-Hochachse HV des Verstellbacken-Grundkörpers aufgespannt ist. Alternativ oder zusätzlich kann vorgesehen sein, dass der Massenmittelpunkt des Verstellbacken-Grundkörpers und/oder der Verstellbacken-Baugruppe in der Verstellbacken-Längsmittelebene oder nah bei der Verstellbacken-Längsmittelebene liegt.

Exemplarisch kann vorgesehen sein, dass sich bei dem Spannsystem die zentrale Verstellbacken-Hochachse rechtwinklig zu der Tischoberfläche des Maschinentisches erstreckt. Alternativ oder zusätzlich kann vorgesehen sein, dass sich bei dem Spannsystem die zentrale Festbacken-Hochachse rechtwinklig zu der Tischoberfläche des Maschinentisches erstreckt.

Beispielhaft kann vorgesehen sein, dass sich die Linearführungsschiene, konkret eine Schienen-Längsachse der Linearführungsschiene in der Verstellbacken-Längsmittelebene erstreckt.

Die Erfindung wird nachfolgend anhand einer Zeichnung näher erläutert.

Es zeigen:
- Figur 1: in einer perspektivischen Ansicht ein Spannsystem;
- Figur 2: in einer Schnittansicht eine erste, von dem Maschinentisch begrenzte Maschinentisch-Nut;
- Figur 3: in einer Schnittansicht die erste Maschinentisch-Nut mit einer in der ersten Maschinentisch-Nut angeordneten Rasterzentriernutleiste;
- Figur 4: in einer Schnittansicht die erste Maschinentisch-Nut mit der in der ersten Maschinentisch-Nut angeordneten Rasterzentriernutleiste, und zwar bei einer mit dem Maschinentisch verbundenen Spannvorrichtung;
- Figur 5: in einer perspektivischen Ansicht eine Verstellbacken-Baugruppe;
- Figur 6: in einer perspektivischen Ansicht eine Festbacken-Baugruppe;
- Figur 7: in einer Ansicht von oben das Spannsystem mit zwei Spannvorrichtungen;
- Figur 8: in einer Ansicht von oben das Spannsystem gemäß der Figur 7, bei dem die zwei Spannvorrichtungen nebeneinander montiert sind;
- Figur 9: in einer Ansicht von oben das Spannsystem gemäß der Figur 1, wobei die Festbacken-Baugruppe um einen 180°-Winkel um eine Hochachse der Festbacken-Baugruppe gedreht ist;
- Figur 10: in einer Ansicht von oben das Spannsystem gemäß der Figur 1, wobei das Spannsystem um einen 180°-Winkel um eine Hochachse des Spannsystems gedreht ist, und
- Figur 11: in einer Schnittansicht ein Schienensystem mit einer Linearführungsschiene, Wälzkörpern und einem Schlitten.

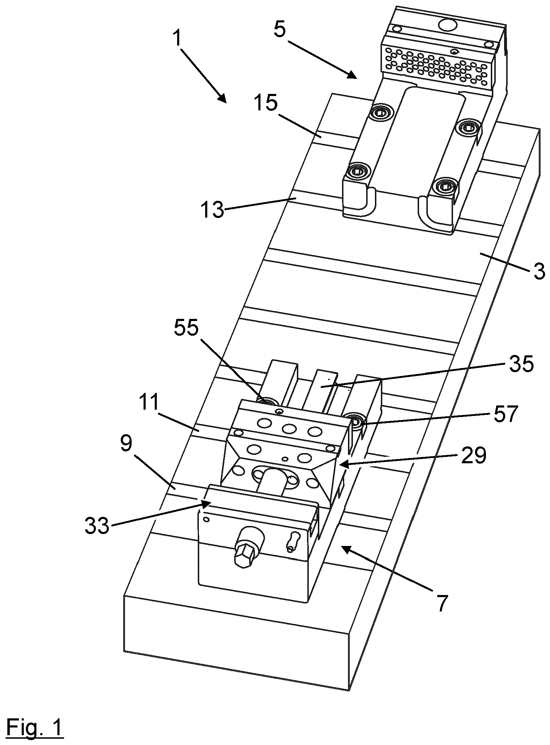

In der Figur 1 ist ein Spannsystem 1 zum Einspannen eines Werkstückes (nicht dargestellt) dargestellt. Das Spannsystem 1 weist einen Maschinentisch 3 einer Werkzeugmaschine sowie eine mit dem Maschinentisch 3 verbundene Spannvorrichtung auf. Die Spannvorrichtung ist durch eine Festbacken-Baugruppe 5 und durch eine Verstellbacken-Baugruppe 7 gebildet. Die Festbacken-Baugruppe 5 ist eine von der Verstellbacken-Baugruppe 7 separate Baugruppe. Die Festbacken-Baugruppe 5 und die Verstellbacken-Baugruppe 7 sind mit dem Maschinentisch 3 verbunden, wobei vorgesehen ist, dass die Festbacken-Baugruppe 5 separat von der Verstellbacken-Baugruppe 7 mit dem Maschinentisch 3 verbunden ist.

Eine andere Ausführungsform des Spannsystems 1 kann sich von dem Spannsystem 1 beispielsweise lediglich dadurch unterscheiden, dass die Festbacken-Baugruppe 5 durch eine weitere Verstellbacken-Baugruppe 7 ersetzt ist. Dieses Spannsystem weist somit keine Festbacken-Baugruppe 5, dafür aber zwei identische und/oder bau- und funktionsgleiche Verstellbacken-Baugruppen 7 auf.

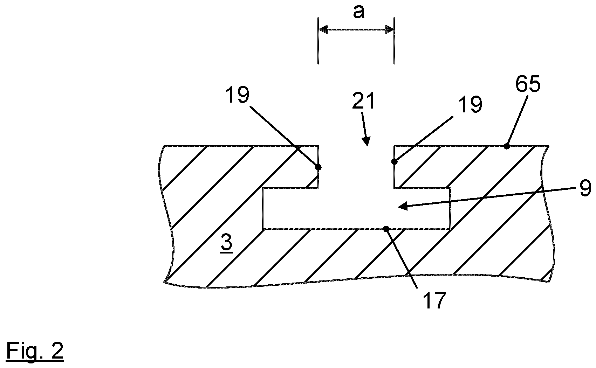

Dem Maschinentisch 3 ist, hier lediglich beispielhaft, eine erste Maschinentisch-Nut 9, eine zweite Maschinentisch-Nut 11, eine dritte Maschinentisch-Nut 13 und eine vierte Maschinentisch-Nut 15 zugeordnet. Die Maschinentisch-Nuten 9, 11, 13 und 15 sind, wie dies in Figur 2 anhand der ersten Maschinentisch-Nut 9 beispielhaft für alle Maschinentisch-Nuten 9, 11, 13 und 15 dargestellt ist, jeweils T-förmig ausgebildet und weisen jeweils einen Nutboden 17, bevorzugt genau, zwei Nutseitenwände 19 und eine Nutöffnung 21 auf. Der Maschinentisch 3 begrenzt jede der Maschinentisch-Nuten 9, 11, 13 und 15 mit Ausnahme der Nutöffnung 21 nach außen und bildet für jede der Maschinentisch-Nuten 9, 11, 13 und 15 den Nutboden 17 sowie die Nutseitenwände 19. Jede der Nutöffnungen 21 weist eine vordefinierte Öffnungsbreite a auf. Die vordefinierte Öffnungsbreite a weist für alle Maschinentisch-Nuten 9, 11, 13 und 15 den gleichen Betrag auf.

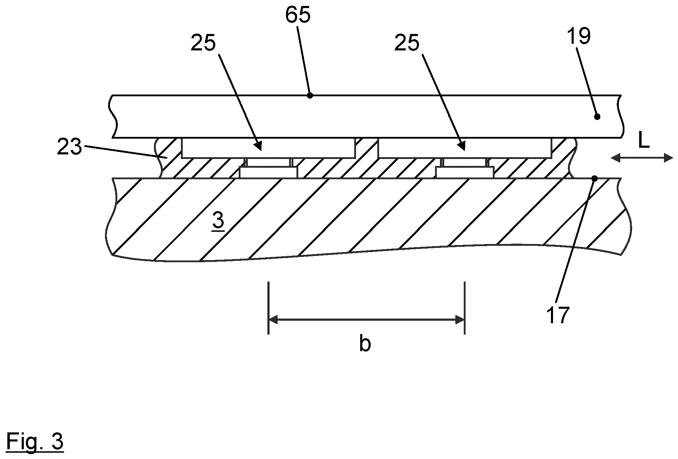

In der ersten Maschinentisch-Nut 9, der zweiten Maschinentisch-Nut 11, der dritten Maschinentisch-Nut 13 und der vierten Maschinentisch-Nut 15 ist jeweils eine von vier bau- und funktionsgleichen Rasterzentriernutleisten 23 angeordnet und positionsgenau fixiert. Wie dies in Figur 3 anhand der ersten Maschinentisch-Nut 9 beispielhaft für alle Maschinentisch-Nuten und jede Rasterzentriernutleiste 23 dargestellt ist, weist jede Rasterzentriernutleiste 23 mehrere Innengewindebohrungen 25 auf, die in einer Längserstreckungsrichtung L der jeweiligen Rasterzentriernutleiste 23 um einen vordefinierten Innengewindebohrungs-Abstand b äquidistant voneinander beabstandet sind. Der Betrag des vordefinierten Innengewindebohrungs-Abstand b kann, hier lediglich beispielhaft, exakt 25 mm betragen.

Die Maschinentisch-Nuten 9, 11, 13 und 15 verlaufen parallel zueinander und sind von der oder den jeweils benachbarten Maschinentisch-Nuten 9, 11, 13 oder 15 um einen vordefinierten Nutabstand c äquidistant voneinander beabstandet. Der Betrag des vordefinierten Nutabstandes c kann, hier lediglich beispielhaft, 100 mm betragen. Alternativ kann der Betrag des vordefinierte Nutabstandes c lediglich beispielhaft auch 125 mm betragen.

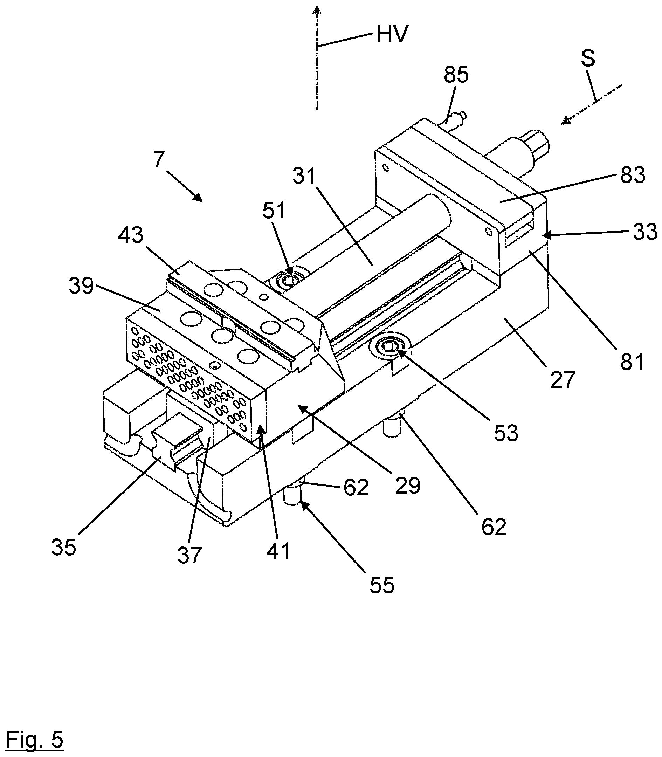

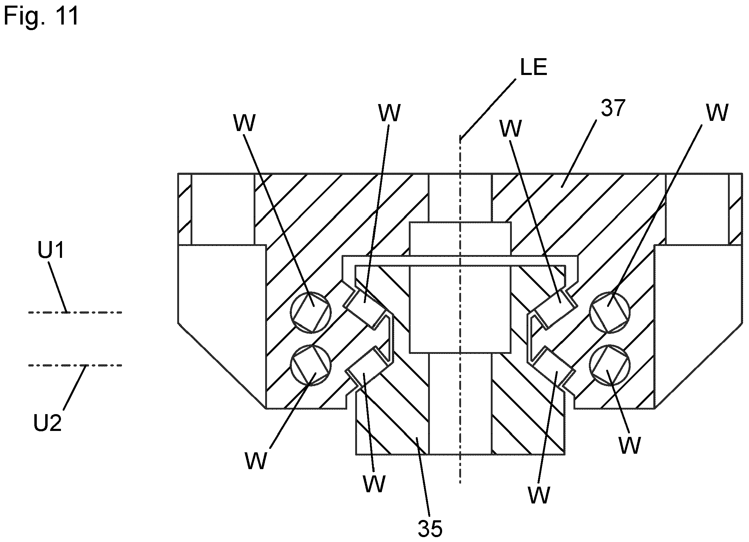

Die Verstellbacken-Baugruppe 7 weist einen, im Wesentlichen L-förmigen Verstellbacken-Grundkörper 27, eine Verstellbackeneinheit 29, eine Spindel 31, einen Lagerbock 33 für die Spindel 31 sowie ein, in der Figur 11 gezeigtes, Schienensystem mit einer Linearführungsschiene 35 und einem Schlitten 37 auf. Die Verstellbackeneinheit 29 weist eine Verstellbacke 39 und eine Verstellbacken-Spannplatte 41 auf und kann optional, wie beispielsweise in Figur 5 dargestellt, eine Verstellbacken-Prägespannleiste 43 aufweisen.

Die Festbacken-Baugruppe 5 weist einen, im Wesentlichen L-förmigen Festbacken-Grundkörper 45 sowie eine zur Verstellbacken-Spannplatte 41 identische Festbacken-Spannplatte 47 auf und kann optional, wie beispielsweise in Figur 5 dargestellt, eine zur Verstellbacken-Prägespannleiste 41 identische Festbacken-Prägespannleiste 49 aufweisen.

Lediglich beispielhaft können die Spindel 31, der Lagerbock 33, die Linearführungsschiene 35 und/oder der Schlitten 37 aus Stahl gefertigt sein. Die Verstellbacke 39, der Festbacken-Grundkörper 45 und der Verstellbacken-Grundkörper 27 können aus einer Aluminiumlegierung gefertigt sein und vorzugsweise eloxiert sein.

Die Verstellbacken-Baugruppe 7, konkret der Verstellbacken-Grundkörper 27, ist über vier Verstellbacken-Schrauben, und zwar eine erste Verstellbacken-Schraube 51, eine zweite Verstellbacken-Schraube 53, eine dritte Verstellbacken-Schraube 55 und eine vierte Verstellbacken-Schraube 57, mit dem Maschinentisch 3 verbunden. Die erste Verstellbacken-Schraube 51 und die zweite Verstellbacken-Schraube 53 sind mit Innengewindebohrungen 25 der in der ersten Maschinentisch-Nut 9 angeordneten Rasterzentriernutleiste 23 verschraubt. Die dritte Verstellbacken-Schraube 55 und die vierte Verstellbacken-Schraube 57 sind mit Innengewindebohrungen 25 der in der zweiten Maschinentisch-Nut 11 angeordneten Rasterzentriernutleiste 23 verschraubt.

Jede der Verstellbacken-Schrauben 51, 53, 55 und 57 ist durch einen Zentrierhülsendurchlass einer Verstellbacken-Zentrierhülse 61 geführt. Jede der Verstellbacken-Zentrierhülsen 61 ist passgenau und/oder spielfrei in einen von dem Verstellbacken-Grundkörper 27 nach radial außen begrenzten und dem Verstellbacken-Grundkörper 27 zugeordneten Verstellbacken-Durchbruch eingesetzt. Die Längsachse einer jeden Verstellbacken-Schraube 51, 53, 55 oder 55 erstreckt sich koaxial zu einer Längsachse der jeweils zugeordneten Verstellbacken-Zentrierhülse 61 und koaxial zu einer Längsachse des jeweils zugeordneten Verstellbacken-Durchbruchs.

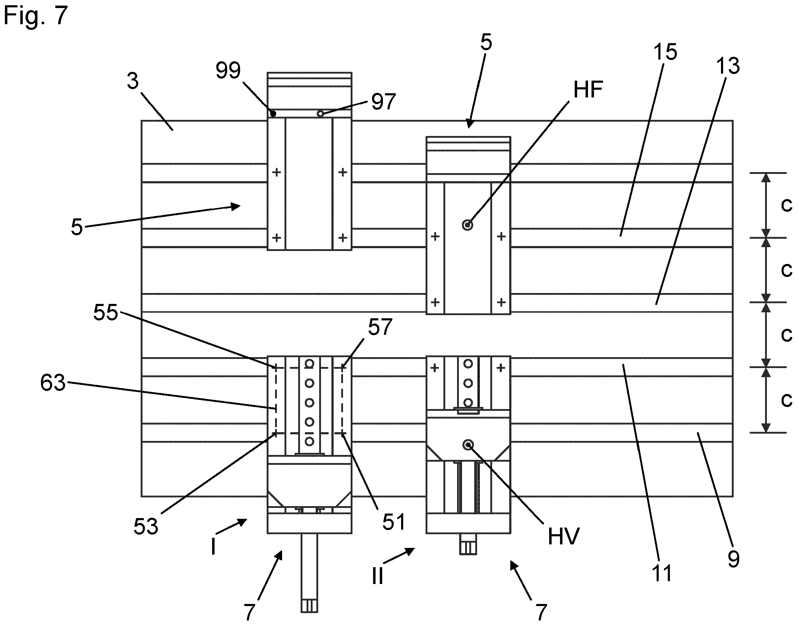

Die Schraubenachsen der Verstellbacken-Schrauben 51, 53, 55 und 57 verlaufen parallel zueinander und parallel zu einer zentralen Verstellbacken-Hochachse HV des Verstellbacken-Grundkörpers 27 und sind, in Richtung der Schraubenachsen der Verstellbacken-Schrauben 51, 53, 55 oder 57 gesehen, in einem quadratischen Muster und/oder entsprechend einem quadratischen Lochbild 63 (siehe gestrichelte Linie in Figur 7) angeordnet. Die Kantenlänge des quadratischen Musters und/oder des quadratischen Lochbildes 63 ist dabei betragsgleich mit dem Betrag des vordefinierten Nutabstands c. Das heißt, dass die Schraubenachse der ersten Verstellbacken-Schraube 51 um den Betrag des vordefinierten Nutabstands c von der Schraubenachse der vierten Verstellbacken-Schraube 57 und um den Betrag des vordefinierten Nutabstands c von der Schraubenachse der zweiten Verstellbacken-Schraube 53 beabstandet ist. Ferner heißt das, dass die Schraubenachse der dritten Verstellbacken-Schraube 55 um den Betrag des vordefinierten Nutabstands c von der Schraubenachse der vierten Verstellbacken-Schraube 57 und um den Betrag des vordefinierten Nutabstands c von der Schraubenachse der zweiten Verstellbacken-Schraube 53 beabstandet ist.

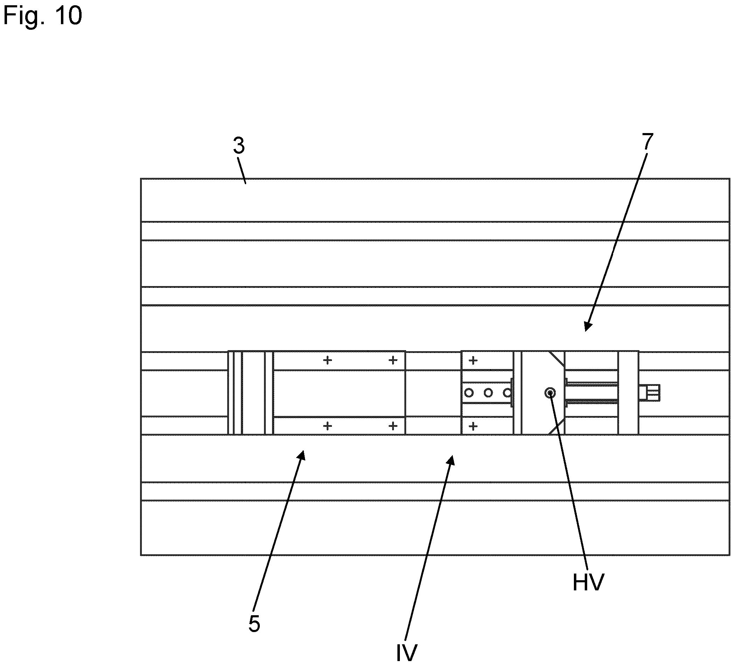

Da sich die Abstände der Verstellbacken-Schrauben 51, 53, 55 und 57 an dem vordefinierten Nutabstand c orientieren, kann der Verstellbacken-Grundkörper 27 nicht nur in der in Figur 1 dargestellten Lage relativ zum Maschinentisch 3 mit dem Maschinentisch 3 verbunden sein. Stattdessen kann der Verstellbacken-Grundkörper 27 um eine Hochachse, bevorzugt um die zentrale Verstellbacken-Hochachse HV, des Verstellbacken-Grundkörpers 27, in Bezug auf die in Figur 1 dargestellte Lage, um einen Winkel von +90°, um einen Winkel von +180° oder um einen Winkel von +270° (siehe Figur 10) gedreht und dann mit dem Maschinentisch 3 verbunden werden.

Die Festbacken-Baugruppe 5, konkret der Festbacken-Grundkörper 45, ist über vier Festbacken-Schrauben, und zwar eine erste Festbacken-Schraube 71, eine zweite Festbacken-Schraube 73, eine dritte Festbacken-Schraube 75 und eine vierte Festbacken-Schraube 77, mit dem Maschinentisch 3 verschraubt. Die erste Festbacken-Schraube 71 und die zweite Festbacken-Schraube 73 sind mit Innengewindebohrungen 25 der in der vierten Maschinentisch-Nut 15 angeordneten Rasterzentriernutleiste 23 verschraubt. Die dritte Festbacken-Schraube 75 und die vierte Festbacken-Schraube 77 sind mit Innengewindebohrungen 25 der in der dritten Maschinentisch-Nut 13 angeordneten Rasterzentriernutleiste 23 verschraubt.

Jede der Festbacken-Schrauben 71, 73, 75 und 77 ist durch einen Zentrierhülsendurchlass einer Festbacken-Zentrierhülse geführt. Jede der Festbacken-Zentrierhülsen ist passgenau und/oder spielfrei in einen von dem Festbacken-Grundkörper 45 nach radial außen begrenzten und dem Festbacken-Grundkörper 45 zugeordneten Festbacken-Durchbruch eingesetzt. Die Längsachse einer jeden Festbacken-Schraube 71, 73, 75 und 77 erstreckt sich koaxial zu einer Längsachse der jeweils zugeordneten Festbacken-Zentrierhülse und koaxial zu einer Längsachse des jeweils zugeordneten Festbacken-Durchbruchs.

Die Schraubenachsen der Festbacken-Schrauben 71, 73, 75 und 77 verlaufen parallel zueinander und sind, in Richtung der Schraubenachsen der Festbacken-Schrauben 71, 73, 75 und 77 gesehen, in dem quadratischen Muster und/oder entsprechend dem quadratischen Lochbild 63 angeordnet. Die Kantenlänge des quadratischen Musters und/oder des quadratischen Lochbildes 63 ist dabei ebenfalls betragsgleich mit dem vordefinierten Nutabstand c. Das heißt, dass die Schraubenachse der ersten Festbacken-Schraube 71 um den Betrag des vordefinierten Nutabstands c von der Schraubenachse der zweiten Festbacken-Schraube 73 und um den Betrag des vordefinierten Nutabstandes c von der Schraubenachse der vierten Festbacken-Schraube 77 beabstandet ist. Ferner heißt das, dass die Schraubenachse der dritten Festbacken-Schraube 75 um den Betrag des vordefinierten Nutabstandes c von der Schraubenachse der vierten Festbacken-Schraube 77 und um den Betrag des vordefinierten Nutabstandes c von der Schraubenachse der zweiten Festbacken-Schraube 73 beabstandet ist. Da sich die Abstände der Festbacken-Schrauben 71, 73, 75 und 77 an dem vordefinierten Nutabstand c orientieren, kann die Festbacken-Baugruppe 5, konkret der Festbacken-Grundkörper 45, nicht nur in der in Figur 1 dargestellten Lage relativ zum Maschinentisch 3 mit dem Maschinentisch 3 verbunden sein. Stattdessen kann der Festbacken-Grundkörper 45 um eine Hochachse, bevorzugt um die zentrale Festbacken-Hochachse HF, des Festbacken-Grundkörpers 45, in Bezug auf die in Figur 1 dargestellte Lage, um einen Winkel von +90°, um einen Winkel von +180° oder um einen Winkel von +270° (siehe Figur 10) gedreht und dann mit dem Maschinentisch 3 verbunden werden.

Jede der Zentrierhülsen, das heißt jede der Verstellbacken-Zentrierhülsen 61 und jede der Festbacken-Zentrierhülsen, ragt mit einem Hülsenüberstand 62 über den jeweils zugeordneten Durchbruch hinaus, und zwar in Richtung des Maschinentisches 3.

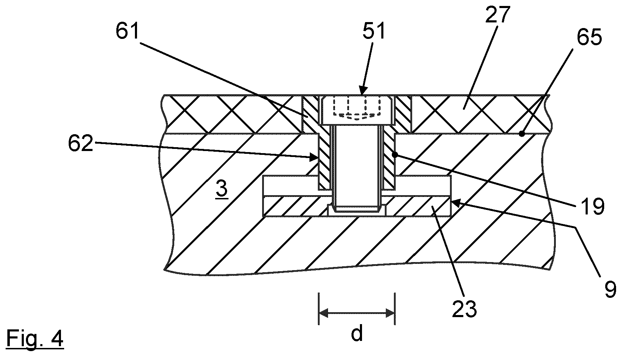

Alle Verstellbacken-Zentrierhülsen 61 und alle Festbacken-Zentrierhülsen weisen im Bereich ihres Hülsenüberstandes 62 einen Außendurchmesser d (siehe Figur 4) auf, der betragsgleich zu der vordefinierten Öffnungsbreite a der jeweils zugeordneten Nutöffnung 21 ist. Durch die in die Maschinentisch-Nuten 9, 11, 13 und 15 hineinragenden Verstellbacken-Zentrierhülsen 61 und Festbacken-Zentrierhülsen lassen sich die Festbacken-Baugruppe 5 und die Verstellbacken-Baugruppe 7 passgenau und/oder wiederholgenau und/oder spielfrei und in vordefinierten Lagen an dem Maschinentisch 3 befestigen. Das heißt, dass die Lage der Festbacken-Baugruppe 5, konkret des Festbacken-Grundkörpers 45, und die Lage der Verstellbacken-Baugruppe 7, konkret des Verstellbacken-Grundkörpers 27, relativ zum Maschinentisch 3, bevorzugt ausschließlich, mittels der Verstellbacken-Zentrierhülsen 61 und der Festbacken-Zentrierhülsen sowie deren Wechselwirkung mit den jeweils zugeordneten Nutseitenwänden 19 und mit den jeweils zugeordneten Verstellbacken-Durchbrüchen und Festbacken-Durchbrüchen bestimmt wird.

Alle Zentrierhülsen, das heißt die Verstellbacken-Zentrierhülsen 61 und die Festbacken-Zentrierhülsen, ragen nur in Richtung des Maschinentisches 3 über den Festbacken-Grundkörper 45 oder über den Verstellbacken-Grundkörper 27 hinaus. Im Übrigen liegen die Zentrierhülsen, das heißt die Verstellbacken-Zentrierhülsen 61 und die Festbacken-Zentrierhülsen, flächig am Festbacken-Grundkörper 45 oder am Verstellbacken-Grundkörper 27 an oder schließen jeweils zur Seite flächenbündig mit dem Festbacken-Grundkörper 45 oder mit dem Verstellbacken-Grundkörper 27 ab, wie dies beispielsweise in der Figur 1 dargestellt ist.

Wie dies in der Figur 4 anhand der Verstellbacken-Baugruppe 7 beispielhaft auch für die Festbacken-Baugruppe 5 veranschaulicht ist, sind zwischen Schraubenköpfen der Verstellbacken-Schrauben 51, 53, 55 und 57 und der jeweils zugeordneten Rasterzentriernutleiste 23 der Verstellbacken-Grundkörper 27, die Verstellbacken-Zentrierhülsen 61 und der Maschinentisch 3 verspannt.

Über die vier Festbacken-Zentrierhülsen, die vier von dem Festbacken-Grundkörper 45 begrenzten Festbacken-Durchbrüche und die dritte Maschinentisch-Nut 13 und die vierte Maschinentisch-Nut 15 ist die Lage des Festbacken-Grundkörpers 45 am Maschinentisch 3 über vier Lagerstellen vorgegeben. Über die vier Verstellbacken-Zentrierhülsen 61, die vier von dem Verstellbacken-Grundkörper 27 begrenzten Verstellbacken-Durchbrüche und die erste Maschinentisch-Nut 9 und die zweite Maschinentisch-Nut 11 ist die Lage des Verstellbacken-Grundkörpers 27 am Maschinentisch 3 ebenfalls über vier Lagerstellen vorgegeben. Der Verstellbacken-Grundkörper 27 und der Festbacken-Grundkörper 45 sind daher, hinsichtlich ihrer Parallelität, besonders exakt und/oder wiederholgenau am Maschinentisch 3 befestigbar.

Die Zentrierhülsen, das heißt die Verstellbacken-Zentrierhülsen 61 und die Festbacken-Zentrierhülsen, tragen jeweils zur Festlegung der Lage des Festbacken-Grundkörpers 45 oder des Verstellbacken-Grundkörpers 27 relativ zueinander und relativ zum Maschinentisch 3 sowie zum Verspannen des Festbacken-Grundkörpers 45 oder des Verstellbacken-Grundkörpers 27 mit dem Maschinentisch 3 bei. Die Zentrierhülsen, das heißt die Verstellbacken-Zentrierhülsen 61 und die Festbacken-Zentrierhülsen, erfüllen somit jeweils eine Doppelfunktion, so dass ein Verspannen des Festbacken-Grundkörpers 45 oder des Verstellbacken-Grundkörpers 27 über Spannpratzen oder Nullpunktspannplatten bei dem Spannsystem 1 nicht erforderlich ist.

Lediglich ergänzend wird an dieser Stelle darauf hingewiesen, dass der Betrag des vordefinierten Nutabstandes c, hier lediglich beispielhaft und nicht zwingend, ein ganzzahliges Vielfaches des Betrages des vordefinierten Innengewindebohrungs-Abstandes b ist. So sind die Festbacken-Baugruppe 5 und die Verstellbacken-Baugruppe 7 in vordefinierten Abstandsschritten parallel zum Maschinentisch 3 an dem Maschinentisch 3 befestigbar. Die in den Maschinentisch-Nuten 9, 11, 13 und 15 angeordneten Rasterzentriernutleisten 23 können bei dieser oder einer anderen Ausführungsform des Spannsystems 1 jeweils auch durch einzelne Nutensteine (nicht dargestellt) gebildet sein. Die Nutensteine können untereinander verbunden sein oder separat voneinander in einer ihnen zugeordneten Maschinentisch-Nut angeordnet sein.

Die Verstellbacke 39 ist fest mit dem Schlitten 37 des Schienensystems verbunden. Die Linearführungsschiene 35 ist in eine von dem Verstellbacken-Grundkörper 27 begrenzte und sich in einer Längsmittelebene des Verstellbacken-Grundkörpers 27 erstreckende Längsnut eingesetzt und mit dem Verstellbacken-Grundkörper 27 mehrfach verschraubt. Der Schlitten 37 bildet zusammen mit der Linearführungsschiene 35 eine Laufrollenführung über die die Verstellbacke 39, mittels Drehen oder Verschieben der Spindel, entlang einer Spindel-Drehachse S der Spindel 31 relativ zum Verstellbacken-Grundkörper 27 verstellbar ist. Über das Schienensystem ist die Verstellbackeneinheit 29, konkret die Verstellbacke 39, an dem Verstellbacken-Grundkörper 27 verschieblich gelagert. Zwischen der Verstellbackeneinheit 29, konkret der Verstellbacke 39, und dem Verstellbacken-Grundkörper 27 besteht keine unmittelbare Verbindung und auch kein unmittelbarer Kontakt. Stattdessen ist die Verstellbackeneinheit 29 über das Schienensystem, die Spindel 31 und den Lagerbock 33 an dem Verstellbacken-Grundkörper 27 angebunden.

Die Spindel 31 weist ein Spindel-Außengewinde auf, das mit einem Lagerbock-Innengewinde eines Lagerbock-Schwenkbügels 83 in Gewindeeingriff steht. Zusätzlich ist die Spindel 31 um die der Spindel 31 zugeordnete Spindel-Drehachse S frei drehbar in der Verstellbacke 39 gelagert, so dass - bei geschlossenem Lagerbock-Schwenkbügel 83 - ein Drehen der Spindel 31 um die Spindel-Drehachse S und relativ zum Lagerbock 33 zu einer Verstellung der Verstellbacke 39 entlang der Spindel-Drehachse S und relativ zum Verstellbacken-Grundkörper 27 führt.

Der Lagerbock 33 ist zweiteilig ausgeführt, und zwar mit einem Lagerbock-Unterteil 81 und dem schwenkbeweglich an dem Lagerbock-Unterteil 81 gelagerten Lagerbock-Schwenkbügel 83. Das Lagerbock-Unterteil 81 ist, bevorzugt unmittelbar, mit dem Verstellbacken-Grundkörper 27 verbunden. Der Lagerbock-Schwenkbügel 83 ist mittels eines Arretierstiftes 85 in einer Schließposition des Lagerbock-Schwenkbügels 83 arretierbar.

Das Lagerbock-Innengewinde wird allein von dem Lagerbock-Schwenkbügel 83 bereitgestellt. Durch Verschwenken des Lagerbock-Schwenkbügels 83 relativ zum Lagerbock-Unterteil 81, und zwar von der Schließposition des Lagerbock-Schwenkbügels 83 in eine Offenposition des Lagerbock-Schwenkbügels 83, kommt das dem Lagerbock-Schwenkbügel 83 zugeordnete Lagerbock-Innengewinde außer Gewindeeingriff mit dem Spindel-Außengewinde. Die Spindel 31 ist somit, annähernd entlang der Spindel-Drehachse S, translatorisch und relativ zum Lagerbock 33 frei verstellbar. Auf diese Weise ist eine Schnellverstellung der Spindel 31 und damit auch der Verstellbacke 39 entlang der Spindel-Drehachse S ermöglicht. Ist die Schnellverstellung erfolgt, so wird der Lagerbock-Schwenkbügel 83 von seiner Offenposition in seine Schließposition geschwenkt - das heißt, dass der Lagerbock-Schwenkbügel 83 geschlossen wird - und das Spindel-Außengewinde steht wieder in Gewindeeingriff mit dem Lagerbock-Innengewinde. Durch Drehen der Spindel 31 um die Spindel-Drehachse S kann ein Werkstück dann endgültig eingespannt werden.

Die Verstellbacken-Spannplatte 41 und die Festbacken-Spannplatte 47 sind bau und funktionsgleich. Sowohl die Verstellbacken-Spannplatte 41 als auch die Festbacken-Spannplatte 47 weisen einen Plattenkörper 91 mit mehreren Plattendurchbrüchen auf. Die Längsachsen der Plattendurchbrüche erstrecken sich parallel zueinander. In jedem der Plattendurchbrüche sind Passstifte 93 eingesetzt, der verschieblich zum jeweils zugeordneten Plattendurchbruch am Plattenkörper 91 gelagert sind. Mehrere in einer Ebene angeordnete Passstifte 93 bilden eine von mehreren Passstiftebenen, die übereinander angeordnet sind. Je nach Geometrie des Werkstückes wird das Werkstück dann auf Passstiften 93 einer bestimmten Passstiftebene aufgelegt und mittels der Spannvorrichtung eingespannt.

Der Plattenkörper 91 weist eine Spannfläche 95 auf, mit der die Stirnseiten der Passstifte 93, in einem eingeschobenen Zustand der Passstifte 93 flächenbündig abschließen. In einem ausgefahrenem Zustand der Passstifte 93 ragen die Passstifte 93 an der Spannfläche 95 des Plattenkörpers 91 über den Plattenkörper 91 hinaus. Die Plattendurchbrüche münden an ihrer der Spannfläche 95 des Plattenkörpers 91 abgewandten Seite in eine gemeinsame Druckkammer (nicht dargestellt). Die Druckkammer kann, lediglich beispielhaft, sowohl von dem Plattenkörper 91 als auch von der Verstellbacke 39 als auch von den Passstiften 93 druckdicht begrenzt sein. Alternativ dazu ist es selbstverständlich auch möglich, dass die Druckkammer im Wesentlichen nur von dem Plattenkörper 91 und den Passstiften 93 nach außen druckdicht begrenzt ist.

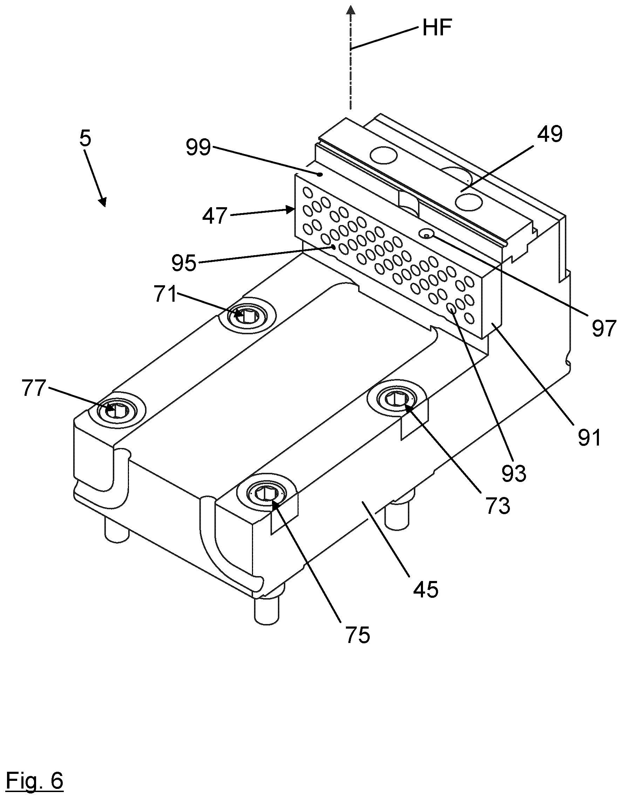

Die Druckkammer steht mit einem, bevorzugt einzigen, Druckluftanschluss 97 des Plattenkörpers 91 in Strömungsverbindung. Durch Einblasen von Druckluft über den Druckluftanschluss 97 (siehe Figuren 6 und 7) in die Druckkammer werden die Passstifte 93 in ihren ausgefahrenen Zustand überführt und können dann manuell und/oder einzeln innerhalb der Plattendurchbrüche entlang ihrer Längsachsen in ihren eingefahrenen Zustand verschoben werden.

Der Plattenkörper 91 weist neben der Spannfläche 95 zwei Schmalseitenflächen und eine Deckseitenfläche 99 (siehe Figur 7) und eine Bodenseitenfläche auf. Im montierten Zustand der Verstellbacken-Spannplatte 41 oder der Festbacken-Spannplatte 47 zeigt die Bodenseitenfläche in Richtung des Schienensystems. Um eine jederzeit gute Zugänglichkeit des Druckluftanschlusses 97 zu gewährleisten ist der Druckluftanschluss 97 an der Deckseitenfläche 99 des Plattenkörpers 91 angeordnet oder der Deckseitenfläche 99 des Plattenkörpers 91 zugeordnet.

Die Passstifte 93 sind, hier lediglich beispielhaft, in ihrem Querschnitt kreisrund ausgeführt. Selbstverständlich ist es auch möglich, die Passstifte 93 in ihrem Querschnitt beispielsweise rechteckig, quadratisch oder oval auszuführen.

Bei der in der Figur 7 Ausführungsform des Spannsystems, weist das Spannsystem zwei identische Spannvorrichtungen auf, die in zwei unterschiedlichen Montagepositionen I und II dargestellt sind. Bei der Montageposition II ist die Festbacken-Baugruppe 5 im Vergleich zu der Montageposition I näher an der Verstellbacken-Baugruppe 7 montiert. In der Montageposition II ist der Festbacken-Grundkörper 45 um den Betrag des vordefinierten Nutabstands c näher an dem Verstellbacken-Grundkörper 27 am Maschinentisch 3 montiert. Dies ist möglich, da die Schraubenachse der ersten Festbacken-Schraube 71 und die Schraubenachse der vierten Festbacken-Schraube 77 exakt um den Betrag des vordefinierten Nutabstandes c beabstandet sind und die Schraubenachse der zweiten Festbacken-Schraube 73 und die Schraubenachse der dritten Festbacken-Schraube 75 ebenfalls exakt um den Betrag des vordefinierten Nutabstandes c beabstandet sind.

In der Figur 8 ist das Spannsystem gemäß der Ausführungsform der Figur 7 gezeigt, wobei die beiden Spannvorrichtungen unmittelbar, das heißt nahezu lückenlos, nebeneinander auf dem Maschinentisch 3 montiert sind. Durch die Aneinanderreihung zwei oder mehrerer Spannvorrichtungen lassen sich so beliebig lange und ununterbrochene Einspannlängen realisieren.

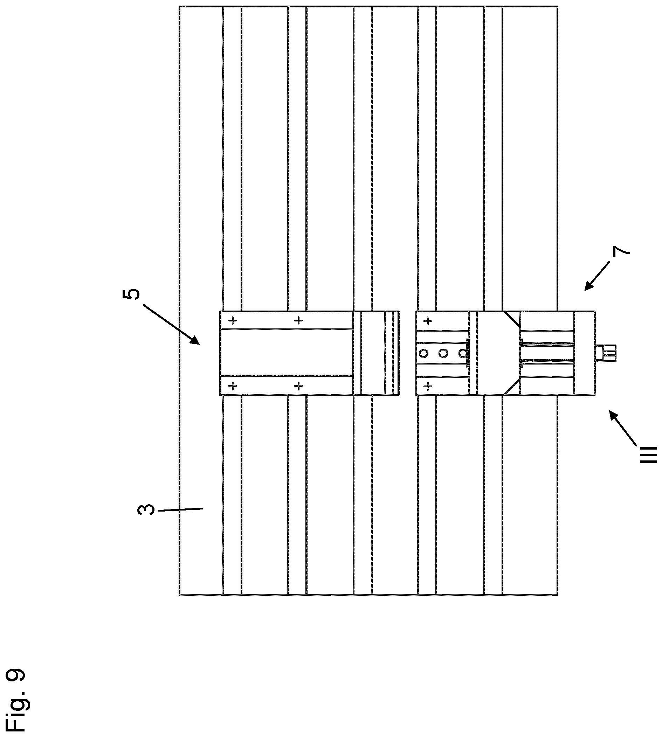

In der Figur 9 ist die Spannvorrichtung des Spannsystems in einer Montageposition III gezeigt. In der Montageposition III ist die Festbacken-Baugruppe 5 im Vergleich zu der Montageposition II der Figur 7 um einen 180°-Winkel um die zentrale Hochachse HF des Festbacken-Grundkörpers 45 gedreht und mit dem Maschinentisch 3 verbunden.

In der Figur 10 ist die Spannvorrichtung des Spannsystems in einer Montageposition IV gezeigt. In der Montageposition IV ist die Spannvorrichtung im Vergleich zu der Montageposition I oder II der Figur 7 um einen 180°-Winkel um eine zentrale Hochachse der Spannvorrichtung gedreht und mit dem Maschinentisch 3 verbunden.

Wie dies in der Figur 11 dargestellt ist, weist das Schienensystem, das hier lediglich beispielhaft durch eine Profilschienenwälzführung gebildet ist, die Linearführungsschiene 35, den Schlitten 37 und die Wälzkörper W auf. Das Schienensystem weist eine erste Gruppe der Wälzkörper W auf, die an einer ersten Seite der Linearführungsschiene 35 angeordnet ist. Die erste Gruppe der Wälzkörper W ist in der Figur 11 rechts von der Linearführungsschiene 35 dargestellt. Alternativ oder zusätzlich ist die erste Gruppe der Wälzkörper W rechts von einer Verstellbacken-Längsmittelebene LE des Verstellbacken-Grundkörpers 27 angeordnet. Ferner weist das Schienensystem eine zweite Gruppe der Wälzkörper W auf, die an einer zweiten, der ersten Seite der Linearführungsschiene 35 gegenüberliegenden, Seite der Linearführungsschiene 35 angeordnet ist. Die zweite Gruppe der Wälzkörper W ist in der Figur 11 links von der Linearführungsschiene 35 dargestellt. Alternativ oder zusätzlich ist die zweite Gruppe der Wälzkörper W links von einer Verstellbacken-Längsmittelebene LE des Verstellbacken-Grundkörpers 27 angeordnet.

Ein Teil der Wälzkörper W der ersten Gruppe ist in einer ersten Umlaufebene U1 ringförmig angeordnet und läuft, bei einer Verstellung des Schlittens 37 relativ zu der Linearführungsschiene 35, entlang einer ringförmigen Umlaufbahn in der ersten Umlaufebene U1 um. Ein anderer Teil der Wälzkörper W der ersten Gruppe ist in einer zweiten Umlaufebene U2 ringförmig angeordnet und läuft, bei einer Verstellung des Schlittens 37 relativ zu der Linearführungsschiene 35, entlang einer ringförmigen Umlaufbahn in der zweiten Umlaufebene U2 um. Ein Teil der Wälzkörper W der zweiten Gruppe ist in der ersten Umlaufebene U1 ringförmig angeordnet und läuft, bei einer Verstellung des Schlittens 37 relativ zu der Linearführungsschiene 35, entlang einer ringförmigen Umlaufbahn in der ersten Umlaufebene U1 um. Ein Teil der Wälzkörper W der zweiten Gruppe ist in der zweiten Umlaufebene U2 ringförmig angeordnet und läuft, bei einer Verstellung des Schlittens 37 relativ zu der Linearführungsschiene 35, entlang einer ringförmigen Umlaufbahn in der zweiten Umlaufebene U2 um. Die ringförmigen Umlaufbahnen erstrecken sich jeweils teilweise innerhalb des Schlittens 35 und jeweils teilweise zwischen der Linearführungsschiene 35 und dem Schlitten 37.

Die erste Umlaufebene U1 erstreckt sich parallel beabstandet von der zweiten Umlaufebene U2 erstreckt. Die erste Umlaufebene U1 erstreckt sich ferner parallel beabstandet zu der Tischoberfläche 65 des Maschinentisches 3, auf der Verstellbacken-Baugruppe 7 montiert ist.

Wie in der Figur 11 gezeigt, weisen die Wälzkörper W jeweils die Form eines Zylinders auf. Selbstverständlich können die Wälzkörper W bei dieser oder einer anderen Ausführungsform des Schienensystems stattdessen beispielsweise im Wesentlichen jeweils die Form einer Kugel aufweisen.

### Bezugszeichenliste

- 1: Spannsystem
- 3: Maschinentisch
- 5: Festbacken-Baugruppe
- 7: Verstellbacken-Baugruppe
- 9: erste Maschinentisch-Nut
- 11: zweite Maschinentisch-Nut
- 13: dritte Maschinentisch-Nut
- 15: vierte Maschinentisch-Nut
- 17: Nutboden
- 19: Nutseitenwand
- 21: Nutöffnung
- 23: Rasterzentriernutleiste
- 25: Innengewindebohrung
- 27: Verstellbacken-Grundkörper
- 29: Verstellbackeneinheit
- 31: Spindel
- 33: Lagerbock
- 35: Linearführungsschiene
- 37: Schlitten
- 39: Verstellbacke
- 41: Verstellbacken-Spannplatte
- 43: Verstellbacken-Prägespannleiste
- 45: Festbacken-Grundkörper
- 47: Festbacken-Spannplatte
- 49: Festbacken-Prägespannleiste
- 51: erste Verstellbacken-Schraube
- 53: zweite Verstellbacken-Schraube
- 55: dritte Verstellbacken-Schraube
- 57: vierte Verstellbacken-Schraube
- 61: Verstellbacken-Zentrierhülse
- 62: Hülsenüberstand
- 63: Lochbild
- 65: Tischoberfläche
- 71: erste Festbacken-Schraube
- 73: zweite Festbacken-Schraube
- 75: dritte Festbacken-Schraube
- 77: vierte Festbacken-Schraube
- 81: Lagerbock-Unterteil
- 83: Lagerbock-Schwenkbügel
- 85: Arretierstift
- 91: Plattenkörper
- 93: Passstift
- 95: Spannfläche

- a: Öffnungsbreite
- b: I nnengewindebohrungs-Abstand
- c: Nutabstand
- d: Außendurchmesser

- HF: zentrale Festbacken-Hochachse
- HV: zentrale Verstellbacken-Hochachse
- LE: Verstellbacken-Längsmittelebene
- S: Spindel-Drehachse
- U1: erste Umlaufebene
- U2: zweite Umlaufebene
- W: Wälzkörper

## Patentansprüche

1. Spannsystem für ein Werkstück, mit:
einem Maschinentisch (3), und
einer Spannvorrichtung,
wobei die Spannvorrichtung mit dem Maschinentisch (3) verbunden ist, und
wobei die Spannvorrichtung durch eine Festbacken-Baugruppe (5) und durch eine von der Festbacken-Baugruppe (5) separate, Verstellbacken-Baugruppe (7) gebildet ist.

2. Spannsystem nach Anspruch 1, **dadurch gekennzeichnet, dass** die Festbacken-Baugruppe (5) und/oder die Verstellbacken-Baugruppe (7), bevorzugt unmittelbar, auf einer Tischoberfläche (65) des Maschinentisches (3) aufliegen und gegen diese verspannt sind.

3. Spannsystem nach Anspruch 1 oder 2, **dadurch gekennzeichnet, dass** die Verstellbacken-Baugruppe (7) einen Verstellbacken-Grundkörper (27) und/oder eine Verstellbackeneinheit (29) und/oder ein Schienensystem aufweist,
wobei bevorzugt vorgesehen ist, dass die Verstellbackeneinheit (29) über das Schienensystem mit dem Verstellbacken-Grundkörper (27) verbunden ist.

4. Spannsystem nach Anspruch 3, **dadurch gekennzeichnet, dass** das Schienensystem eine Linearführungsschiene (35) und einen Schlitten (37) sowie Wälzkörper (W) aufweist,
wobei bevorzugt vorgesehen ist, dass die Linearführungsschiene (35), die Wälzkörper (W) und der Schlitten (37) eine Laufrollenführung und/oder eine Profilschienenwälzführung für die Verstellbackeneinheit (29) bilden.

5. Spannsystem nach Anspruch 4, **dadurch gekennzeichnet, dass** bei dem Schienensystem eine erste Gruppe der Wälzkörper (W) auf einer ersten Seite der Linearführungsschiene (35) angeordnet ist, und/oder dass bei dem Schienensystem eine zweite Gruppe der Wälzkörper (W) auf einer zweiten, der ersten Seite der Linearführungsschiene (35) gegenüberliegenden, Seite der Linearführungsschiene (35) angeordnet ist.

6. Spannsystem nach einem der vorhergehenden Ansprüche, **dadurch gekennzeichnet, dass** ein Verstellbacken-Grundkörper (27) über vier Verstellbacken-Lagerstellen lagefest an dem Maschinentisch (3), bevorzugt in Maschinentisch-Nuten (9; 11; 13; 15) des Maschinentisches (3), besonders bevorzugt in einer ersten Maschinentisch-Nut (9) und/oder einer zweiten Maschinentisch-Nut (11), gelagert ist, und/oder dass jede der Verstellbacken-Lagerstellen durch eine Verstellbacken-Zentrierhülse (61) gebildet ist, die in einen von dem Verstellbacken-Grundkörper (27) nach außen begrenzten Verstellbacken-Durchbruch eingesetzt ist, und dass jede der Verstellbacken-Zentrierhülsen (61) mit einem Hülsenüberstand (62) in eine der Maschinentisch-Nuten, bevorzugt in die erste Maschinentisch-Nut (9) oder in die zweite Maschinentisch-Nut (11), einragt,
und/oder dass jede der Verstellbacken-Zentrierhülsen (61) im Bereich ihres Hülsenüberstandes (62) einen Außendurchmesser (d) aufweist, der betragsgleich mit einer Öffnungsbreite (a) der Nutöffnung (21) einer der Verstellbacken-Zentrierhülse (61) jeweils zugeordneten Maschinentisch-Nut ist.

7. Spannsystem nach Anspruch 6, **dadurch gekennzeichnet, dass** jeder Verstellbacken-Zentrierhülse (61) eine Verstellbacken-Schraube (51; 53; 55; 57) zugeordnet ist, die durch einen, bevorzugt von der jeweils zugeordneten Verstellbacken-Zentrierhülse (61) nach außen begrenzten, Zentrierhülsendurchlass geführt ist,
wobei bevorzugt vorgesehen ist, dass die Verstellbacken-Schraube (51) über eine Innengewindebohrung (25) eines, bevorzugt einer Maschinentisch-Nut angeordneten und/oder fixierten, besonders bevorzugt in der ersten Maschinentisch-Nut (9) oder in der zweiten Maschinentisch-Nut (11) angeordneten und/oder fixierten, Nutelementes mit dem Nutelement verschraubt ist,
wobei besonders bevorzugt vorgesehen ist, dass die Verstellbacken-Schraube (51) derart mit dem Nutelement verschraubt ist, dass zwischen einem Schraubenkopf der Verstellbacken-Schraube (51) eine der Verstellbacken-Zentrierhülsen (61), der Verstellbacken-Grundkörper (27) und der Maschinentisch (3) verspannt ist.

8. Spannsystem nach einem der vorhergehenden Ansprüche, **dadurch gekennzeichnet, dass** die Festbacken-Baugruppe (5) einen Festbacken-Grundkörper (45) aufweist, der bevorzugt über vier Festbacken-Lagerstellen lagefest an dem Maschinentisch (3), bevorzugt in Maschinentisch-Nuten des Maschinentisches, besonders bevorzugt in einer dritten Maschinentisch-Nut (13) und/oder einer vierten Maschinentisch-Nut (15), gelagert ist.

9. Spannsystem nach Anspruch 8, **dadurch gekennzeichnet, dass** jede der Festbacken-Lagerstellen durch eine Festbacken-Zentrierhülse gebildet ist, die in einen von dem Festbacken-Grundkörper (45) nach außen begrenzten Festbacken-Durchbruch eingesetzt ist, und dass jede der Festbacken-Zentrierhülsen mit einem Hülsenüberstand in eine der Maschinentisch-Nuten, bevorzugt in die dritte Maschinentisch-Nut (13) oder in die vierte Maschinentisch-Nut (15), einragt.

10. Spannsystem nach Anspruch 9, **dadurch gekennzeichnet, dass** jede der Festbacken-Zentrierhülsen im Bereich ihres Hülsenüberstandes einen Außendurchmesser aufweist, der betragsgleich mit einer Öffnungsbreite (a) der Nutöffnung (21) einer der Festbacken-Zentrierhülse jeweils zugeordneten Maschinentisch-Nut ist.

11. Spannsystem nach Anspruch 9 oder 10, **dadurch gekennzeichnet, dass** jeder Festbacken-Zentrierhülse eine Festbacken-Schraube (71; 73; 75; 77) zugeordnet ist, die durch einen, bevorzugt von der jeweils zugeordneten Festbacken-Zentrierhülse nach außen begrenzten, Zentrierhülsendurchlass geführt ist.

12. Spannsystem nach einem der Ansprüche 6 bis 11, **dadurch gekennzeichnet, dass** die Verstellbacken-Durchbrüche und/oder die Festbacken-Durchbrüche in einem quadratischen Lochbild (63) angeordnet sind, wobei bevorzugt vorgesehen ist, dass das quadratische Lochbild (63) eine Kantenlänge aufweist, die betragsgleich mit einem Nutabstand (c) zueinander benachbarter Maschinentisch-Nuten ist.

13. Spannsystem nach Anspruch 3 bis 12, **dadurch gekennzeichnet, dass** die Verstellbackeneinheit (29), bevorzugt ausschließlich, mittelbar mit dem Verstellbacken-Grundkörper (27) verbunden ist und/oder außer Kontakt mit dem Verstellbacken-Grundkörper (27) steht, und/oder dass die Verstellbackeneinheit (29), bevorzugt ausschließlich, über das Schienensystem und/oder über eine Spindel (31) der Verstellbacken-Baugruppe (7) mittelbar mit dem Verstellbacken-Grundkörper (27) verbunden ist.

14. Verstellbacken-Baugruppe (7), bevorzugt nach einem der vorhergehenden Ansprüche,
wobei vorgesehen ist, dass die Verstellbacken-Baugruppe (7) einen Verstellbacken-Grundkörper (27) und/oder eine Verstellbackeneinheit (29) und/oder ein Schienensystem aufweist.

15. Festbacken-Baugruppe (5), bevorzugt nach einem der Ansprüche 1 bis 13,
wobei vorgesehen ist, die Festbacken-Baugruppe (5) einen Festbacken-Grundkörper aufweist,
wobei bevorzugt vorgesehen ist, dass der Festbacken-Grundkörper (45) über vier Festbacken-Lagerstellen lagefest an dem Maschinentisch (3), bevorzugt in Maschinentisch-Nuten des Maschinentisches (3), besonders bevorzugt in einer dritten Maschinentisch-Nut (13) und/oder einer vierten Maschinentisch-Nut (15), gelagert ist.
